# EUROPÄISCHE PATENTSCHRIFT

(11) **EP 0 626 911 B1**
(45) Veröffentlichungstag und Bekanntmachung des Hinweises auf die Patenterteilung: **15.11.1995**
(21) Anmeldenummer: 93904026.7
(22) Anmeldetag: 26.02.1993
(51) Int. Cl.: B60C 23/04, G08C 17/00

(54) **KONTROLLVORRICHTUNG FÜR DEN LUFTDRUCK VON LUFTBEREIFTEN FAHRZEUGRÄDERN**
DEVICE FOR MONITORING THE AIR-PRESSURE IN PNEUMATIC TYRES FITTED ON VEHICLE WHEELS
DISPOSITIF DE CONTROLE DE LA PRESSION DE GONFLAGE DE ROUES DE VEHICULES EQUIPEES DE PNEUS

(30) Priorität: 26.02.1992 DE 4205911
(43) Veröffentlichungstag der Anmeldung: 07.12.1994
(73) Patentinhaber: UWATEC AG, CH-5705 Hallwil (CH)
(72) Erfinder: MOCK, Markus, CH-8610 Uster (CH); VÖLLM, Ernst, CH-8802 Kilchberg (CH)
(74) Vertreter: Wallinger, Michael, Dr.-Ing.
(86) Internationale Anmeldenummer: EP9300452
(87) Internationale Veröffentlichungsnummer: WO9316891

(56) Entgegenhaltungen:
- DE-A- 3 929 361
- DE-A- 3 930 479
- US-A- 4 163 208
- US-A- 4 319 220
- US-A- 4 695 823
- US-A- 4 734 674
- US-A- 4 970 491

## Beschreibung

Die vorliegende Erfindung betrifft eine Kontrollvorrichtung für den Luftdruck in Luftkammern von luftbereiften Fahrzeugrädern, wie sie beispielsweise aus der US-A-4 734 674 bekannt ist.

Derartige Kontrollvorrichtungen werden insbesondere für die Messung des Luftdruckes von Kraftfahrzeugrädern, und zwar sowohl von Lastkraftwagen als auch von Personenkraftwagen verwendet.

Die richtige Einstellung des Luftdruckes von Fahrzeugrädern hat zunächst eine wirtschaftliche Bedeutung, da ein falsch eingestellter, d.h. ein zu hoher oder zu tiefer Luftdruck, zu erhöhtem Reifenverschleiß führt, wodurch die Fahrzeugreifen vorzeitig ersetzt werden müssen. Dies verursacht, insbesondere bei Lastkraftwagen, deren Bereifung in der Regel sehr teuer ist, unnötige Kosten. Ein zu niedriger Reifendruck verursacht auch einen erhöhten Verbrauch.

Bedeutsamer als der Aspekt der Wirtschaftlichkeit ist jedoch der Sicherheitsaspekt. Ein fehlerhafter, insbesondere ein zu geringer Luftdruck in einem Fahrzeugreifen bewirkt eine erhöhte Walkarbeit der Reifenflanken, wodurch die Temperatur des Reifens stark erhöht und die Festigkeit der Reifenflanke herabgesetzt wird. Dadurch kann der Reifen plötzlich zerstört werden. Da die erhöhte Walkarbeit besonders dann auftritt, wenn die Geschwindigkeit hoch ist, führt eine solche Reifenzerstörung oft zu schweren und schwersten Verkehrsunfällen.

Um die wirtschaftlichen Nachteile und insbesondere die Unfallgefahr zu vermeiden, muß der Luftdruck regelmäßig, bel Lastkraftwagen sogar täglich, überprüft werden. Die Überprüfung unterbleibt jedoch häufig, da die Reifendruckmessung eine relativ langwierige und auch schmutzige Arbeit ist, die zudem auch ein gewisses technisches Geschick erfordert.

In der Patentliteratur sind deshalb verschiedentlich Vorschläge gemacht worden, den Reifenluftdruck mittels eines am Fahrzeugrad angeordneten Drucksensors zu messen, und dieses Meßsignal dann in geeigneter Weise dem Fahrer anzuzeigen. Ein solcher Vorschlag findet sich z.B. in der DE-39 30 479 A1.

Die Realisierung derartiger Kontrollvorrichtungen stößt in der Praxis jedoch auf erhebliche Schwierigkeiten.

Da das Fahrzeugrad während der Fahrt rotiert und eine mechanische Übertragung der Meßsignale vom drehenden Rad auf die nicht-rotierenden Teile des Fahrzeuges in der Regel aus Platzgründen nicht möglich ist, muß die Übertragung des Meßsignales drahtlos erfolgen. Dabei bietet sich neben der Infrarotübertragung und der Ultraschallübertragung vor allen Dingen eine elektromagnetische Signalübertragung an. Die elektromagnetische Signalübertragung bereitet jedoch Probleme, da im Fahrzeug eine Vielzahl von elektrischen Signalquellen vorhanden sind, z.B. die Zündanlage, die Lichtmaschine, elektrisch betriebene Gebläse, sowie sonstige elektrische Hilfsmotoren usw. Außerdem gibt es zahlreiche externe Störquellen, wie z.B. Straßenbahnen, Signalanlagen aber auch Radiosender und dergleichen, die die Übertragung beeinflussen können.

An die Zuverlässigkeit einer Kontrollvorrichtung müssen hohe Anforderungen gestellt werden. Ist die Kontrollvorrichtung bei einer Störung nicht in der Lage, das Auftreten des zu überwachenden Kontrollereignisses zuverlässig anzuzeigen, kann sie den ihr zugedachten Zweck nicht erfüllen. Löst die Kontrollvorrichtung auf der anderen Seite jedoch häufiger Fehlalarme aus, wird sie vom Fahrer nicht mehr beachtet und bleibt deshalb ohne Wirkung, wenn das Kontrollereignis tatsächlich auftritt und angezeigt wird.

Weiterhin ist im Hinblick auf die erforderliche Zuverlässigkeit zu berücksichtigen, daß beim Vorhandensein einer derartigen Kontrollvorrichtung eine manuelle Überprüfung des Reifendruckes nicht mehr stattfindet, da sich die Fahrer jeweils darauf verlassen, daß eine fehlerhafte Reifendruckeinstellung durch die Kontrollvorrichtung angezeigt wird.

Die im Stand der Technik bekannten Kontrollvorrichtungen können diese hohen Anforderungen an die Zuverlässigkeit nicht erfüllen.

Der vorliegenden Erfindung liegt deshalb die Aufgabe zugrunde, eine Kontrollvorrichtung der eingangs genannten Art zu schaffen, durch welche eine zuverlässige Erfassung und Anzeige des Luftdruckes bzw. der Luftdruckänderung in der Luftkammer eines luftbereiften Fahrzeugrades geschaffen wird.

Diese Aufgabe wird erfindungsgemäß durch den Gegenstand des Anspruches 1 gelöst.

Zu bevorzugende Weiterbildungen der Erfindung sind Gegenstand der Unteransprüche.

Bei der erfindungsgemäßen Vorrichtung ist eine Druckmeßeinrichtung vorgesehen, welche den in der Luftkammer des Rades herrschenden Druck erfaßt und ein dafür repräsentatives elektrisches Signal ausgibt. Je nach Aufbau und Anordnung der Druckmeßeinrichtung kann die Erfassung des Druckes als Absolutdruck erfolgen, d.h. ohne Bezug auf den umgebenden Atmosphärendruck, als Überdruck in bezug auf den Atmosphärendruck und als Differenzdruck in bezug auf einen vorgegebenen Vergleichsdruck.

Die Sendeeinrichtung ist, wie die Druckmeßeinrichtung, am Fahrzeugrad angeordnet und kann unmittelbar am Ventil, d.h. im Inneren des Schlauches oder des Reifens befestigt sein oder in geeigneter Weise an der Felge befestigt, z.B. eingelassen sein.

Während Druckmeßeinrichtung und Sendeeinrichtung mit dem Rad rotieren können müssen, ist die Empfangseinrichtung stationär am Fahrzeug oder in einem dafür vorgesehenen tragbaren Gehäuse untergebracht. Je nach Ausführung kann jedem Rad eines Fahrzeuges eine eigene Empfangseinrichtung zugeordnet sein, es ist aber auch möglich, eine zentrale Empfangseinrichtung vorzusehen, eine Empfangseinrichtung, die jeweils die Signale der an einer Achse angeordneten Räder erfaßt und auch Empfangseinrichtungen, insbesondere bei Lastkraftwagen, die jeweils die Signale einer Gruppe von, z.B. an einer Seite des Lastkraftwagens angeordneten Räder aufnimmt. Die Bauteile der Empfangseinrichtung können somit in unterschiedliche Bereiche aufgeteilt bzw. zusammengefaßt werden.

Die Sendeeinrichtung weist eine Steuereinrichtung, vorzugsweise einen programmgesteuerten Mikroprozessor auf, welcher die Austrahlung der Sendesignale steuert. Weiterhin weist die Sendeeinrichtung eine Signalgenierungs-Einrichtung auf, welche ein für die jeweilige Sendeeinrichtung charakteristisches Identifikationssignal generiert. Dieses Signal wird zumindest einmal vor oder nach der Aussendung des Drucksignals ausgesandt.

Die Empfangseinrichtung weist einen Speicher auf, in dem ein Identifikations-Vergleichssignal gespeichert ist, das dem Identifikationssignal dieser individuellen Sendeeinrichtung zugeordnet ist. D.h., daß das Identifikationssignal und Identifikations-Vergleichssignal entweder identisch sind, oder in einer festen (mathematischen) Beziehung zueinander stehen. Eine in der Empfangseinrichtung vorgesehene Vergleichseinrichtung bewirkt, daß eine Weiterverarbeitung des Drucksignals nur erfolgt, wenn das von der Sendeeinrichtung ausgestrahlte und von der Empfangseinrichtung empfangene Identifikationssignal mit dem in der Empfangseinrichtung abgespeicherten Identifikations-Vergleichssignal identisch ist, bzw. diesem zugeordnet ist.

Durch diese Gestaltung wird eine außerordentlich hohe Zuverlässigkeit der Kontrollvorrichtung und ein starker Schutz gegen Störungen der Datenühertragung zwischen Sendeeinrichtung und Empfangseinrichtung bewirkt.

Es ist unwahrscheinlich, daß ein Störsignal so beschaffen ist, daß es exakt dem Identifikationssignal entspricht und somit von der Empfangseinrichtung als ein von der individuellen Sendeeinrichtung ausgestrahltes Signal erfaßt werden kann. Zufällig eingestreute Signale können somit nicht zu einer falschen Anzeige oder zu einem Fehlalarm der Kontrollvorrichtung führen.

Weiterhin wird durch diese Gestaltung zuverlässig verhindert, daß eine Überlagerung der von verschiedenen Sendeeinrichtungen ausgestrahlten Signale als Meßwert erfaßt und somit fehlinterpretiert wird.

Um die optimale Wirtschaftlichkeit und Betriebssicherheit des Fahrzeuges zu erreichen, ist es zu bevorzugen, daß alle Räder des Fahrzeuges mit einer Druckmeßeinrichtung und einer Sendeeinrichtung versehen sind. In diesem Fall gibt es unterschiedliche Gestaltungsmöglichkeiten für die Empfangseinrichtung:
1. Die Empfangseinrichtung kann zentral ausgeführt werden und erfaßt dann die Signale aller Räder.
2. Für jedes Rad kann eine weitgehend autonome Empfangseinrichtung vorgesehen werden. Zu bevorzugen ist in diesem Fall jedoch, daß zumindest eine gemeinsame Anzeigeneinrichtung im Armaturenbrett oder dergleichen vorgesehen ist.
3. Es können Mischformen der Ausführungen nach Ziffer 1 und 2 ausgeführt werden, bei welchen Teile der Empfangseinrichtung dezentral in der Nähe der Räder angeordnet und andere Teile zu einer zentralen Baugruppe zusammengefaßt sind. Dabei kann auch ein Empfangsteil für mehrere Räder verwendet werden, die z.B. an einer Achse oder an einer Seite eines Fahrzeuges (z.B. im Bereich der Doppelachse eines Lkw) angeordnet sind. Die Bauteile der Empfangseinrichtung können dabei beliebig in unterschiedliche Baugruppen aufgeteilt bzw. zusammengefaßt werden. Im Extremfall beinhalten die dezentral in der Nähe der Räder angeordneten Teile der Empfangseinrichtung nur eine Antenne.

Wenn an einem Fahrzeug alle Räder mit einer entsprechenden Sendeeinrichtung ausgestattet sind, ist es zu bevorzugen, daß die Kontrollvorrichtung bei einem zentralen oder teilzentralen Aufbau der Empfangseinrichtung eine Zuordnung zwischen dem empfangenen Sendesignal und der jeweiligen Position des Rades vornehmen kann. Auch dieses wird durch das Identifikationssignal ermöglicht.

Diese Vorgehensweise hat deutliche Vorteile gegenüber dem Versuch, die gegenseitigen Störeinflüsse der einzelnen Rad-Sendegeräte dadurch zu reduzieren, daß die Sendeeinrichtungen nur mit einer geringen Intensität arbeiten. Eine geringe Sendeintensität hat nämlich den Nachteil, daß die Empfangseinrichtung entsprechend empfindlicher gestaltet sein muß und darum in stärkerem Maße durch Fremdsignale gestört wird. Weiterhin ist es bei einer batteriebetriebenen Sendeeinrichtung schwierig, die Sendeintensität konstant zu halten.

Die Verwendung des Identifikationssignales hat auch Vorteile, wenn unterschiedliche Fahrzeuge mit entsprechenden Einrichtungen ausgestattet sind.

Wird eine Messung im stationären Zustand, d.h. bei stehendem Fahrzeug durchgeführt, kann der Abstand zu einem benachbarten stehenden Fahrzeug sehr gering sein, so daß die Empfangseinrichtung Signale beider Fahrzeuge empfängt.

Durch das Identifikationssignal wird sichergestellt, daß nur die Signale der zum jeweiligen Fahrzeug gehörenden Räder verarbeitet werden.

Auch im Fahrbetrieb, z.B. auf mehrspurigen Fahrbahnen kann der Abstand zwischen den Rädern zweier Fahrzeuge so gering sein, daß z.B. eine nur auf einer Intensitätsabschwächung beruhende Differenzierung der Signale zu einer Fehlinterpretation führt.

Die erfindungsgemäße Kontrollvorrichtung weist vorzugsweise eine Umwandlungseinrichtung auf, welche die von der Sendeeinrichtung zu übertragenden Signale digitalisiert. Durch diese Ausgestaltung wird die Zuverlässigkeit der Datenübertragung weiter erhöht, da geringfügige Signalveränderungen die Rückumwandlung des Signales in der Empfangseinrichtung nicht beeinflussen. Das Identifikationssignal wird dann in der Sendeeinrichtung als Folge von n Bits abgespeichert, wobei n vorzugsweise 8, 16, 24, 32 oder auch größer ist. Durch eine entsprechend große Wahl von n können Millionen unterschiedlicher Identifikationssignale definiert werden, so daß die Gefahr, daß zwei, z.B. in unterschiedlichen Fahrzeugen angeordnete Sendeeinrichtungen das gleiche Identifikationssignal haben, außerordentlich gering ist, bzw. auch, z.B. wenn das Identifikationssignal eine Herstellerkennung mit enthält, völlig ausgeschlossen ist.

Gemäß einer bevorzugten Ausgestaltung der Erfindung kann die Zuverlässigkeit der Kontrollvorrichtung noch weiter erhöht werden, wenn das in digitaler Form vorliegenden Sendesignal codiert wird, indem zusätzliche, der Fehlererkennung und der Fehlerkorrektur dienende Bits in das Signal eingefügt werden. Dadurch kann die Empfangseinrichtung einen Teil der möglichen Übertragungsfehler erkennen und gegebenfalls korrigieren.

Wenn eine Sendeeinrichtung immer einer bestimmten Empfangseinrichtung zugeordnet ist, was ohne weiteres möglich ist, kann der Sendeeinrichtung und der Empfangseinrichtung bereits bei der Herstellung das entsprechende Identifikationssignal und das Identifikationsvergleichssignal eingespeichert werden. Zu bevorzugen ist jedoch, daß entweder das Identifikationssignal der Sendeeinrichtung oder das Identifikationssignal der Empfangseinrichtung veränderbar ist. Die letztere Variante ist in der Regel zu bevorzugen, da dadurch der Bauaufwand der am Rad angeordneten Sendeeinrichtung vermindert werden kann.

In beiden Fällen sind entsprechende Einrichtungen vorzusehen, damit das jeweils veränderbare Identifikationssignal nicht zufällig verändert werden kann.

Die Signalübertragung von der Sendeeinrichtung zur Empfangseinrichtung kann kontinuierlich oder diskontinuierlich erfolgen.

Bei der kontinuierlichen Übertragung wird, in vorbestimmten Abständen von z.B. 1 min, der Druck gemessen und ein entsprechendes Signal ausgesandt. Dieses Verfahren eignet sich besonders dafür, im kontinuierlichen Überwachungsbetrieb verwendet zu werden, d.h., wenn der Luftdruck während der gesamten Fahrt überwacht werden soll. Versuche haben gezeigt, daß bei diesem Betriebsmodus die Kapazität einer kleinen Lithiumbatterie, die die Energie für die Sendeeinrichtung liefert, ungefähr für 5 Jahre ausreicht.

Für den diskontinuierlichen Betrieb ergeben sich grundsätzlich zwei Möglichkeiten:
Bei der ersten Alternative wird der Reifendruck durch eine mechanische Einrichtung dauernd überwacht. Dies kann beispielsweise durch eine Membran erfolgen, die eine Referenzkammer gegenüber dem Reifendruck abschließt, wie dies in der EP-A-0 417 712 oder in der EP-A-0 417 704 beschrieben ist. Sobald sich der Reifendruck gegenüber einem Referenzwert um einen bestimmten Betrag ändert, wird ein Schaltglied durch die Membran betätigt und die Ausstrahlung des Drucksignals und des Identifikationssignals bewirkt. Diese Vorrichtung hat den Vorteil, daß sie nur relativ wenig elektrische Energie benötigt und darum mit einer kleinen Batterie betrieben werden kann. Von Nachteil ist jedoch, daß eine Fehlfunktion der Sendeeinrichtung durch die Empfangseinrichtung möglicherweise nicht erkannt wird.

Bei einer zweiten Alternative des diskontinuierlichen Betriebes, der sich vor allen Dingen für die Einmal-Messung des Luftdruckes vor Fahrtantritt oder in Fahrtpausen eignet, wird die Druckmessung und die Ausstrahlung des Sendesignales von außen gestartet. Da das Startsignal aber ebenfalls berührungslos übertragen werden sollte, muß dazu der Sendeeinrichtung eine zusätzliche, zweite Empfangseinrichtung zugeordnet werden, die ebenfalls mit dem Fahrzeugrad rotiert und die das Startsignal für die Druckmessung empfängt und damit über die Steuereinrichtung die Druckmessung auslöst.

Es ist weiterhin, insbesondere bei einer am Ventil angeordneten Sendeeinrichtung möglich, eine Schalteinrichtung vorzusehen, um die Messung manuell zu starten.

Weitere Vorteile, Merkmale und Ausgestaltungen der vorliegenden Erfindung werden nun in bezug auf die beigefügte Zeichnung beschrieben.

Darin zeigen:
- Fig. 1: ein erstes Ausführungsbeispiel der erfindungsgemäßen Kontrollvorrichtung in der Anwendung bei einem Kraftfahrzeug mit vier Rädern;
- Fig. 2: ein schematisches Blockschaltbild des Aufbaus des Sendegeräts beim Ausführungsbeispiel gemäß Fig. 1;
- Fig. 3: in schematisierter Weise der Aufbau des vom Sendegerät gemäß Fig. 2 ausgestrahlten Signals;
- Fig. 4: eine schematische Darstellung der Modulation eines Sendesignals;
- Fig. 5: ein schematisches Blockschaltbild des Aufbaus des Empfangsgeräts beim Ausführungsbeispiel gemäß Fig. 1;
- Fig. 6: ein schematisches Blockschaltbild des Empfangsgerätes eines weiteren Ausführungsbeispiels der Erfindung.

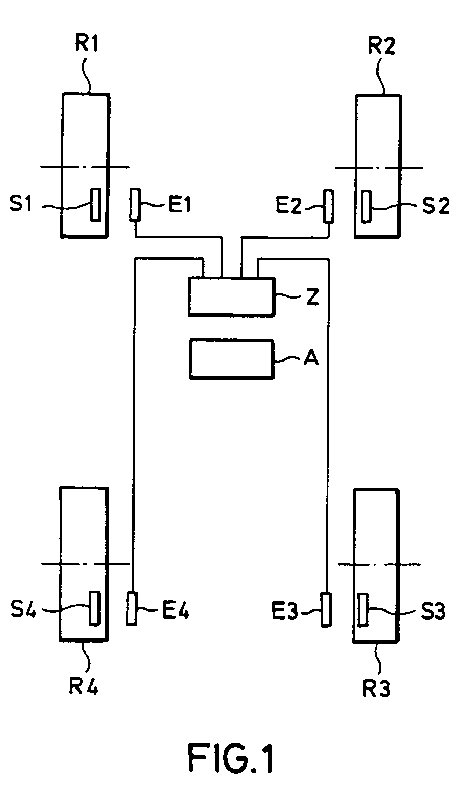

Ein erstes Ausführungsbeispiel der Erfindung wird nun in bezug auf die Fig. 1 bis 5 beschrieben. Das Ausführungsbeispiel ist bei einem PKW dargestellt, der vier Räder aufweist, die jeweils aus einer Metallfelge mit einem darauf angeordneten Reifen bestehen, wobei zwischen dem Reifen und der Felge ein umlaufender Hohlraum ausgebildet ist, der bei sogenannten schlauchlosen Reifen, gasdicht ist und damit die Luftkammer des Rades bildet. Bei Reifen mit Schlauch wird in diesen Hohlraum ein gasdichter Schlauch eingelegt. Die Zufuhr von Luft in die Luftkammer erfolgt über ein Ventil, das bei schlauchlosen Reifen unmittelbar an der Felge vorgesehen ist, bei Reifen mit Schlauch ist in der Felge eine Bohrung vorgesehen, durch die das Ventil gesteckt wird.

An jedem Rad R1 bis R4 ist ein Sendegerät S1 bis S4 angeordnet, welches mit dem jeweiligen Rad rotiert.

Weiterhin sind vier Empfangsteile E1 bis E4 vorgesehen, die an der Fahrzeugkarosserie, an der Radaufhängung oder dergleichen befestigt sind und die über elektrische Leitungen mit einem zentralen Steuergerät Z verbunden sind, welches seinerseits mit einer Anzeigeeinrichtung A verbunden ist.

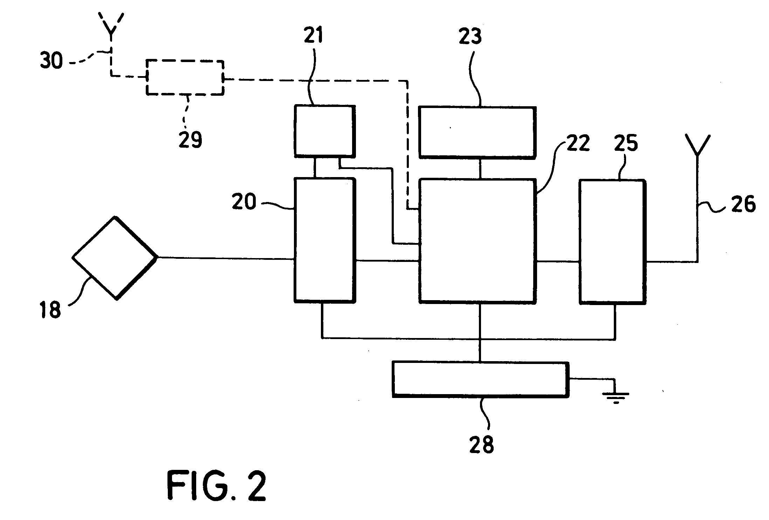

Die Sendegeräte S1 bis S4 beinhalten, wie aus der folgenden Beschreibung in bezug auf die Fig. 2 deutlich wird, eine Druckmeßeinrichtung, eine Sendeeinrichtung, eine Sende-Steuereinrichtung, eine Speichereinrichtung usw.

In jedem Sendegerät ist ein Drucksensor 18 vorgesehen, der über elektrische Leitungen, die hier und im folgenden nur immer schematisch dargestellt sind, mit einer Signalaufbereitungsschaltung 20 verbunden ist.

Als Drucksensor wird vorzugsweise ein Sensor vom piezoelektrischen Typ verwendet, der mit einer Batteriespannung von unter 5 Volt arbeiten kann, wenn der Absolutdruck erfaßt werden soll, wie dies beim Ausführungsbeispiel der Fall ist. Abweichend von dieser Gestaltung kann statt des Absolutdruckes auch ein Differenzdruck zu einem Referenzdruck erfaßt und verarbeitet werden, wie dies im Stand der Technik bekannt ist. Weiterhin ist es möglich, Druckmeßeinrichtungen so zu gestalten, daß nur ein Abfallen des Druckes unter einen vorgegebenen absoluten oder relativen Wert erfaßt wird.

Soll der Drucksensor 18 unmittelbar den Differenzdruck zum Atmosphärendruck messen, muß eine Verbindung zwischen der Druckmeßeinrichtung und der Umgebung bestehen.

Das, beim Ausführungsbeispiel, analoge Signal des Drucksensors wird in der Signalaufbereitungsschaltung 20 mittels eines A/D-Wandlers in ein Digitalsignal umgewandelt. Die Signalaufbereitungsschaltung 20 ist weiterhin mit einem quarzgesteuerten Zeitgeber 21 verbunden, dessen Zweck noch erläutert wird. Das digital aufbereitete Signal wird einer Mikroprozessor-Recheneinheit 22 zugeführt, welche mit einem Speicher 23 verbunden ist, und ebenfalls die Signale des Zeitgebers 21 empfängt.

Im Speicher 23 , der beliebig in einzelne, auch unterschiedliche Speicherbereiche aufgeteilt werden kann, ist, entweder in einem Festwertspeicher oder in einem Speicher, dessen Inhalt durch die Batteriespannung langfristig gesichert wird, ein Programm gespeichert, welches den Mikroprozessor steuert. Weiterhin ist in diesem Speicher 23 auch das Identifikationssignal der Sendeeinrichtung in digitaler Form gespeichert. Durch den Mikroprozessor werden die zu übertragenden Signale in ein Sendesignal umgewandelt und einer Sendeausgangsstufe 25 zugeführt. Von der Sendeausgangsstufe 25 wird das Signal auf eine Antenne 26 übertragen. Zur Stromversorgung des Sendegerätes ist eine Batterie 28, vorzugsweise eine Lithiumbatterie, vorgesehen, die mit dem Rad rotiert.

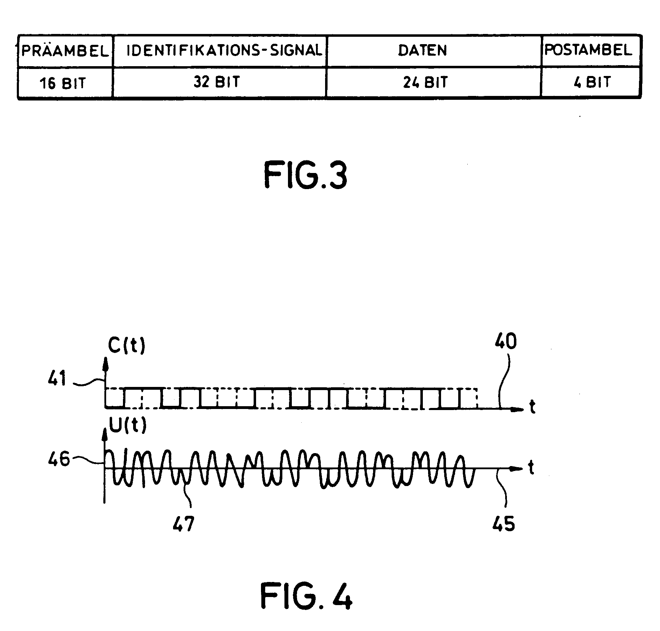

Die Funktion des Sendegerätes ist wie folgt:
Das Sendegerät befindet sich üblicherweise im Stand-by-Modus, in dem nur der Zeitgeber 21 tätig ist, um Batteriekapazität zu sparen. Nach vorgegebenen Zeitintervallen, z.B. alle 60 Sekunden, gibt der Zeitgeber ein Signal aus, welches den Mikroprozessor 22 vom Stand-by-Modus in den aktiven Modus umschaltet. Nach dem Aktivieren des Mikroprozessors wird, gesteuert durch das Programm im Speicher 23, eine Druckmessung vorgenommen. Anschließend wird ein Sendesignal ausgestrahlt, dessen Aufbau schematisch in Fig. 3 dargestellt ist. Die Signalfolge besteht aus einer Präambel von z.B. 16 Bit, die der Empfangseinrichtung die Synchronisation auf das Sendesignal ermöglicht. Daran schließt sich das Identifikations-Signal an, welches das senderspezifische Identifikationsmuster enthält. Das Identifikationssignal ist beim Ausführungsbeispiel eine binäre Zahl mit 32 oder mehr Bit, die im Speicher 23 des Sendegerätes abgespeichert ist. An das Identifikationssignal schließt sich ein Datenblock an, welcher z.B. 24 Bit aufweist und den gemessenen Druckwert in binärer Form enthält. Daauf folgt eine Postambel von z.B. 4 Bit an, die das Signal abschließt.

Zur Erhöhung der Übertragungssicherheit wird das Signal durch Einfügen von Prüfbits verändert, die eine Fehlererkennung und eine Fehlerkorrektur des in der Empfangseinrichtung empfangenen Signals ermöglicht.

Das Sendegerät kann so gesteuert sein, daß diese Signalfolge nur einmal ausgesendet wird. Zur Erhöhung der Sicherheit, die ein besonderes Anliegen der vorliegenden Erfindung darstellt, ist es jedoch zu bevorzugen, daß das Signal mehrfach hintereinander ausgestrahlt wird. Durch diese redundante Ausstrahlung ist es möglich, im, später beschriebenen, Empfangsgerät zu überprüfen, ob mehrere identische Signale empfangen worden sind. Ist dies nicht der Fall, wird die Weiterverarbeitung nicht vorgenommen. Durch diese Maßnahme kann der Schutz gegen Störungen weiter verbessert werden.

Die Signalübertragung vom Sendegerät zum Empfangsgerät erfolgt mittels einer elektromagnetischen Funkwelle konstanter Frequenz. Zur Steuerung der Sendefrequenz dient der quarzgesteuerte Zeitgeber 21. Im Hinblick auf die Übertragungsqualität wird bevorzugt eine Frequenz von ca. 8000 Hertz oder ca. 4000 Hertz verwendet.

Dieses Trägersignal muß in geeigneter Weise moduliert werden, um die digital vorliegenden Informationen an das Empfangsgerät zu übertragen.

Als Modulationsverfahren kommen dabei die Amplitudentastung (ASK), die Frequenzumtastung (FSK) und die Phasenumtastung (PSK) in Frage.

Es ist bereits vorgeschlagen worden, für eine Übertragung des Reifenluftdruckes die Frequenzumtastung zu verwenden, bei welcher den Bitinformationsinhalten 0 und 1 unterschiedliche Frequenzen zugeordnet werden. Bei diesem Verfahren müssen jedoch zwei Frequenzen übertragen werden, was den Aufwand sender- und empfängerseitig erhöht.

Versuche haben ergeben, daß es sowohl vom Aufwand, als auch von der Übertragungsqualität her, besonders günstig ist, die Phasenumtastung, die im englischen Sprachgebrauch als phase shift keying, PSK bezeichnet wird, zu verwenden, und zwar besonders bevorzugt in einer besonderen Variante, nämlich der differentiellen Phasenumtastung, im englischen Sprachgebrauch als differential phase shift keying, DPSK, bezeichnet.

Bei diesem Verfahren erfährt das Sendesignal einen Phasensprung, wenn eine 1 übermittelt wird; soll eine 0 gesendet werden, bleibt das Sendesignal unverändert. Der Phasensprung ist 180°.

Ein Beispiel dieser Modulation ist in Fig. 4 dargestellt.

Dabei ist im oberen Teil des Diagrammes über einer Zeitachse 40 mittels einer Ordinate 41 ein Bitmuster, bestehend aus den Bits 0, 1, 1, 0, 1, 0, 0, 0, 1, 1, ... dargestellt.

Im direkt darunter gezeichneten Diagramm ist über der gleich skalierten Zeitachse 45 und der Spannungsachse 46 ein Spannungssignal 47 dargestellt, welches eine gleichbleibende Frequenz aufweist, dem aber durch die vorbeschriebene DPSK-Modulation das Bitmuster als Phasenänderung aufgeprägt ist.

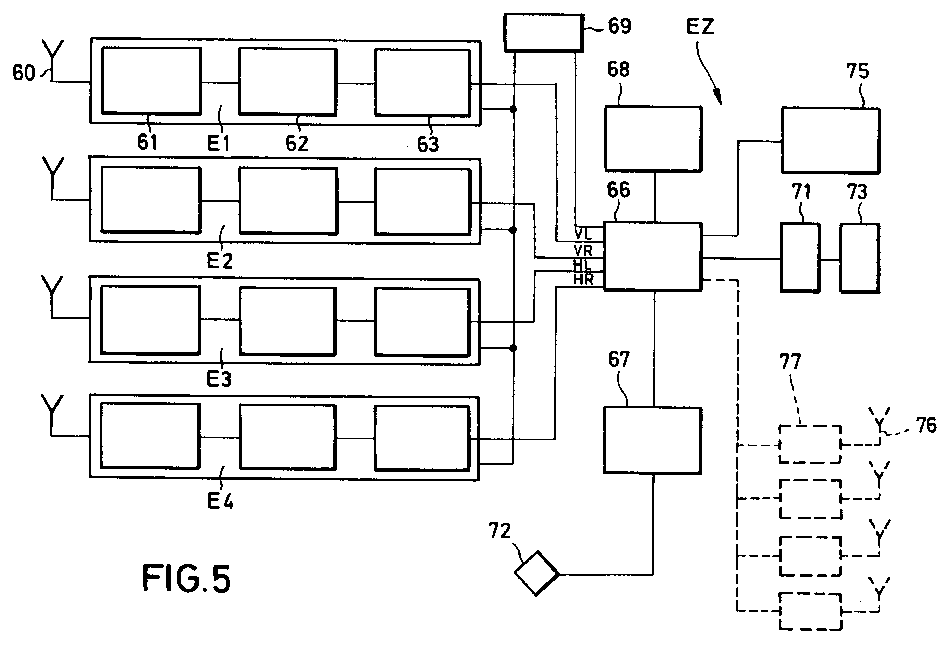

Der Aufbau des Empfangsgerätes wird nun in bezug auf die Fig. 5 beschrieben.

Bei diesem Ausführungsbeispiel gliedert sich das Empfangsgerät in ein erstes Empfangsteil E1 bis E4, welches jeweils in der Nähe eines Rades R1 bis R4 angeordnet ist und in ein zweites zentrales Empfangsteil EZ.

Jedes erste Empfangsteil E1 bis E4 weist eine Antenne 60 auf, deren Signal einer Signalverarbeitungs- und -verstärkungsschaltung 61 zugeführt wird, in der das Signal verstärkt und gefiltert wird. Anschließend wird das Signal in einer Demodulierstufe 62 demoduliert und steht dann als digitales Signal zur Verfügung, welches dem im jeweiligen Sendegerät modulierten digitalen Signal entspricht. Dieses Signalfolge weist aber noch die zur Fehlererkennung hinzugefügten Prüfbits auf, die in der Decodiereinrichtung 63 geprüft und entfernt werden.

Die Decodiereinrichtung ist als Logikschaltung ausgeführt und weist einen Speicher mit veränderbarem Inhalt auf, in dem das Identifikations-Vergleichssignal sowie ein Paarungsmodus-Erkennungssignal gespeichert ist. In die Decodiereinrichtung 63 ist auch die Vergleichsschaltung, die das empfangene, rückgewandelte Signal mit dem gespeicherten Identifikations-Vergleichssignal bzw. dem Paarungsmodus-Erkennungssignal vergleicht, einbezogen. Die Signalverarbeitungsschaltung 61, die Demodulierstufe 62 und die Decodiereinrichtung 63 werden vorzugsweise zu einem anwendungsspezisch gestalteten integrierten Baustein, einem sogenannten ASIC, zusammengefaßt. Dieser Aufbau hat den Vorteil, daß die Signalverarbeitung und der Vergleich mit den gespeicherten Signalen sehr schnell erfolgt und zudem der Mikroprozessor des zentralen Empfangsgerätes nicht durch die Signalverarbeitung und den Vergleich belastet ist.

Die demodulierten und decodierten digitalen Signale werden dann einem zentralen Enpfangsteil EZ zugeführt, welches über elektrische Leitungen mit den ersten Empfangsteilen E1-E4 verbunden ist. Die digitalen Signale werden dort über einem Mikroprozessor 66 zugeführt, welcher mit einem Programm gesteuert wird, das im Speicher 68 abgelegt ist, welcher außerdem auch die Daten aufnimmt. Die Zeitsteuerung des Empfangsgerätes erfolgt über einen Zeitgeber 69.

Der Mikroprozessor ist weiterhin mit einer Signalverarbeitungseinrichtung 71 verbunden, die Signale erzeugt, die in der als Display 73 ausgebildeten Anzeigeeinrichtung angezeigt werden. Mit einem Drucksensor 72 wird der aktuelle Umgebungsdruck gemessen und über eine Signalverarbeitungsstufe 67 dem Mikroprozessor 66 zugeführt, falls eine Anzeige des Reifenluftdruckes als Überdruck erfolgen soll, d.h. als Differenzdruck zum Atmosphärendruck.

Die Funktion des Empfangsgerätes ist nun wie folgt:
Das vom jeweiligen Sendegerät ausgestrahlte Signal wird über die Antenne 60 aufgefangen und in den nachfolgenden Bausteinen digital aufbereitet und dem Mikroprozessor der Decodiereinrichtung 63 zugeführt. Nach dem Empfang eines Signales überprüft die Vergleichsschaltung, ob das Identifikationssignal mit dem gespeicherten Identifikationssignal übereinstimmt. Ist dies der Fall, wird der entsprechende Datenwert ausgewertet und zum zentralen Empfangsteil EZ übertragen. Wird das Sendesignal, wie vorstehend erläutert, mehrfach wiederholt, um Fehlübertragungen zu vermeiden, wird überprüft, ob die nachfolgenden Signale ebenfalls den gleichen Aufbau haben. Werden Abweichungen zwischen den aufeinanderfolgenden Signalen festgestellt, erfolgt keine Speicherung.

Im vorgehenden Absatz wurde davon ausgegangen, daß das Identifikations- und Identifikations-Vergleichssignal identisch sind. Die Prüfung der Identität kann erfolgen, indem der Mikroprozessor eine der digitalen Zahlen von der anderen subtrahiert und die Identität feststellt, wenn das Ergebnis Null ist. Es ist jedoch auch möglich, daß das Identifikations-Vergleichssignal zwar nicht miteinander identisch sind, aber in einer mathematisch definierten Weise einander zugeordnet sind. So kann das Identifikations-Vergleichssignal z.B. als Komplementärwert zum Vergleichssignal ausgebildet sein, d.h., daß die Addition beider Zahlen zum Ergebnis Null führt. Aber auch andere mathematischen Zuordnungen, beispielsweise eine feste Differenz der beiden Zahlen sind möglich.

Um eine theoretisch mögliche Kollision der von den verschiedenen Sendegeräten unabhängig voneinander ausgestrahlten Signale zu vermeiden, werden diese vorzugsweise über eine Zufallschaltung so gesteuert, daß die Ausstrahlung nicht unmittelbar nach der Erfassung des Drucksignales erfolgt, sondern mit einer zufälligen Verzögerung in einem vorgegebenen Zeitbereich, also z.B. innerhalb von 20 Sekunden nach dem Erfassen des Signals. Damit wird verhindert, daß zwei Sendegeräte, die im gleichen Zeitabstand Werte aussenden, längere Zeit Kollisionen haben. Falls dann eine Kollision auftritt, kann die Decodiereinrichtung kein eindeutiges Identifikationssignal erkennen und wertet die Signale solange nicht aus, bis nach dem nächsten oder ubernächsten Zeitintervall ein einwandfrei identifizierbares Signal vorliegt.

Grundsätzlich wird in allen Fällen, in denen das empfangene Signal nicht eindeutig den Anforderungen entspricht, keine Abspeicherung eines Druckmeßwertes durch den Mikroprozessor 66 im Speicher 68 vorgenommen, sondern der letzte, korrekt erfaßte Wert, für das jeweilige Rad beibehalten. Falls innerhalb einer vorbestimmten Zeitspanne kein identifizierbares Signal eines Rades aufgenommen wird, wird ein Alarmsignal ausgegeben und angezeigt, bei welchem Rad die Messung nicht funktioniert.

Die Anzeige der Druckmeßwerte erfolgt beim Ausführungsbeispiel vorzugsweise nach zwei Betriebsarten: Bei der ersten Betriebsart wird die Anzeige vom Fahrer über einen entsprechenden Schalter am Armaturenbrett veranlaßt. Die Anzeigeeinrichtung zeigt dann den Druck gleichzeitig für alle Räder an, wobei auf die jeweils gespeicherten Werte zurückgegriffen wird, oder sie zeigt nacheinander die Druckwerte für die vier Reifen an.

Die zweite Betriebsart ist ein Alarmmodus. Dazu sind im Speicher der Empfangseinrichtung entsprechende Grenzwerte für den Druck in jedem Rad eingespeichert, deren Über- oder Unterschreitung zur Gefährdung der Sicherheit des Fahrzeuges führt. Sobald einer der Meßwerte diese Grenzwerte unter- bzw. überschreitet, wird das Display 73 automatisch eingeschaltet und, vorzugsweise, auch ein akustisches Signal ausgegeben. Da im Display sowohl die Radposition angezeigt wird, als auch der zuletzt gemessene Druck, weiß der Fahrer dann, welches der Räder nicht in Ordnung ist und kann in entsprechender Weise reagieren.

Weiterhin ist es auch möglich, die Reifendruckwerte ständig in einem Display anzuzeigen.

Beim Ausführungsbeispiel werden Sendegeräte verwendet, welche ein fest vorgegebenes Identifikationssignal haben. Es muß deshalb ein Verfahren vorgesehen werden, um das Identifikationssignal jedes Sendegerätes im erstem Empfangsteil zu speichern.

Diese Speicherung, die auch als Paarung bezeichnet wird, muß so ausgeführt werden, daß jede zufällige Veränderung des gespeicherten Identifikationssignales ausgeschlossen wird.

Zu diesem Zweck weist die Empfangseinrichtung gemäß Ausführungsbeispiel eine am Zentralgerät angeordnete Schalteinrichtung 75 auf, mit dem das Empfangsgerät vom Normalmodus in einen Paarungsmodus umgeschaltet werden kann. Da der zentrale Teil des Empfangsgerätes in der Regel hinter dem Armaturenbrett oder im Motorraum angeordnet ist, ist es nicht möglich, diesen Schalter während der Fahrt zu betätigen. Zusätzlich kann auch eine Einrichtung vorgesehen sein, welche verhindert, daß in den Paarungsmodus umgeschaltet wird, wenn das Fahrzeug in Betrieb ist, z.B. indem überpüft wird, ob die Zündung eingeschaltet ist.

Im Paarungsmodus überprüfen die Decodiereinrichtungen 63 der ersten Empfangsteile bzw. der Mikroprozessor 66 im zentralen Empfangsteil EZ, für jedes Empfangsteil E1 bis E4 die Intensität des empfangenen Signales. Jedes von einem Sendegerät eines Rades ausgestrahlte Signal wird dem Empfangsteil E1 bis E4 zugeordnet, bei welchem es die höchste Signalintensität erzeugt. Dabei ergibt sich die Zuordnung zwischen der Position der Empfangsteile E1 bis E4 über die Position der jeweiligen Steckverbindung zwischen diesen Empfangsteilen und dem Zentralgerät, wie dies durch die Buchstaben VL, VR, HL, HR in der Demodulationsstufe 62 gekennzeichnet ist. Da das Fahrzeug in diesem Fall steht, sind die Störungen sehr gering und damit die entsprechende Zuordnung ohne weiteres möglich.

Neben der über die Signalintensität bei stehendem Fahrzeug vorgenommenen Zuordnung gibt es auch die Möglichkeit, eine Zuordnung aktiv vorzunehmen, was auch dann von Vorteil ist, wenn, in einer Abwandlung des Ausführungsbeispiels ein Empfangsgerät für zwei oder mehr Räder vorgesehen ist.

Bei dieser Abwandlung wird die Paarung aktiv vorgenommen und es ist dann beim Zentralgerät EZ der Empfangseinrichtung eine Schalteinrichtung 75 vorgesehen, mit der nicht nur die Empfangseinrichtung in den Paarungsmodus umgeschaltet wird, sondern in der für jede Radposition ein Schalter vorgesehen ist, der jeweils dann manuell aktiviert wird, wenn das Identifikationssignal des Rades in der entsprechenden Position aufgenommen wird.

Sobald das Zentralgerät EZ der Empfangseinrichtung in den Paarungsmodus umgeschaltet ist, und eine Radposition gewählt wurde, wird am jeweiligen Rad manuell eine Druckänderung, z.B. eine Druckerniedrigung durch kurzzeitiges Öffnen des Reifenventils, oder eine Erhöhung des Reifendruckes durch Pumpen, vorgenommen. Die Empfangseinrichtung prüft, bei welchem Identifikationssignal diese Druckänderung auftritt und speichert dann das entsprechende Identifikationssignal für die gewählte Radposition ab. Diese Art der Paarung ist sehr sicher, erfordert aber einen gewissen Zeitaufwand. Dabei ist jedoch zu berücksichtigen, daß eine neue Paarung nur nach einem Radwechsel vorgenommen werden muß. Der erforderliche Zeitaufwand kann verkürzt werden, indem bei dieser Ausführungsform statt der vorstehend genannten 60 Sekunden Zeitabstände zwischen der Ausstrahlung des Signales eine kürzere Ausstrahlung, z.B. alle 30 Sekunden, vorgenommen wird.

Bei einer Alternative zum Ausführungsbeispiel gemäß den Fig. 1 bis 5 weist jedes Sendegerät eine zusätzliche Signalverarbeitungsschaltung 29 und eine zweite Antenne 30, die als Empfangsantenne ausgebildet ist, auf (die in Fig. 2 gestrichelt dargestellt sind). Empfangsantenne 30 und Sendeantenne 26 können unter Umständen auch als eine Antenne ausgeführt sein.

In entsprechender Weise weist jedes Empfangsteil (in Fig. 5 gestrichelt dargestellt) eine Sendeantenne 76 und eine Signalverarbeitungseinrichtung 77 auf. Auch hier kann die Sendeantenne 76 mit der Empfangsantenne 60 zusammenfallen.

Die Funktion dieses Ausführungsbeispiel ist nun wie folgt:
Während beim vorbeschriebenen Ausführungsbeispiel in vorbestimmten Zeitintervallen Messungen vorgenommen werden, wird hier die Druckmessung vom Empfangsgerät ausgelöst. Der Mikroprozessor 66 des Empfangsgerätes bewirkt, daß ein entsprechendes Signal generiert und über die Antenne 76 ausgestrahlt wird. Der Mikroprozessor des Sendegerätes befindet sich immer im Stand-by-Modus. Sobald über die Empfangsantenne 30 und die Signalverarbeitungsschaltung 29 ein Signal empfangen wird, wird eine Messung durchgeführt, und das Ergebnis über die Antenne 26 ausgestrahlt.

Bei diesem Ausführungsbeispiel kann also das zentrale Empfangsgerät die einzelnen Sendegeräte hintereinander abfragen.

Im übrigen ist die Funktion wie beim vorbeschriebenen Ausführungsbeispiel. Der Paarungsmodus wird vorzugsweise etwas anders gestaltet, da nun die Ausstrahlung des Sendesignals aktiv vom Empfangsgerät bewirkt werden kann. Das Empfangsgerät wird also in diesem Falle, sobald es in den Paarungsmodus geschaltet ist, die am Fahrzeug befindlichen Sendegeräte der Reihe nach abfragen und ihre entsprechenden Identifikationssignale aufnehmen und speichern. Dabei kann die Zuordnung über die Signalintensität, oder, hier besonders günstig, über einen von außen bewirktes Ereignis, wie z.B. einen manuell vorgenommenen Druckabfall beim jeweils zuzuordnenden Rad erfolgen.

Beim Ausführungsbeispiel gemäß den Fig. 1 bis 5 erfolgt die Stromversorgung der Empfangseinrichtung über die Bordbatterie des Fahrzeuges. Gegebenenfalls kann eine Zusatzbatterie zur Sicherung des Speicherinhalts vorgesehen werden.

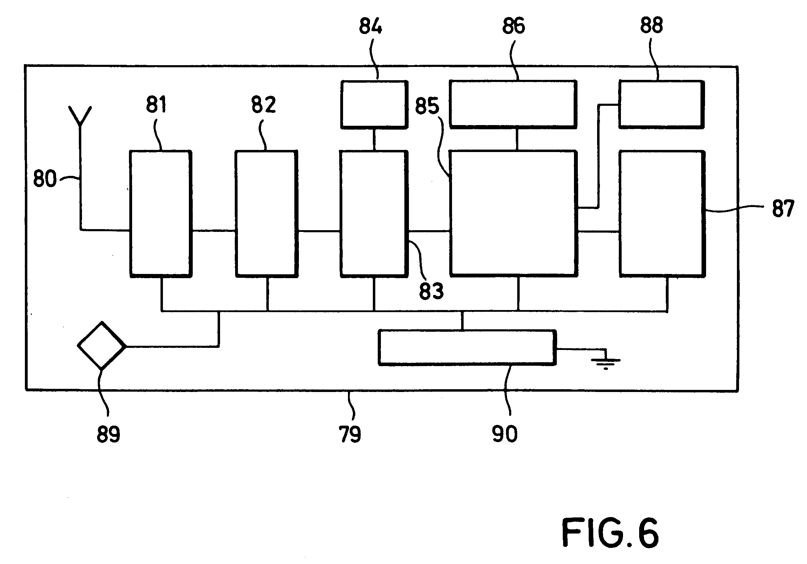

Ein drittes Ausführungsbeispiel der Erfindung wird nun in bezug auf die Fig. 6 beschrieben.

Bei dieser Kontrollvorrichtung werden, an jedem Rad, die gleichen Sendegeräte verwendet, wie sie in bezug auf das abgewandelte Ausführungsbeispiel (gestrichelt) der Fig. 2 beschrieben wurden, d.h. Sendegeräte, welche eine zusätzliche Empfangsantenne aufweisen.

Das Empfangsgerät bei diesem dritten Ausführungsbeispiel ist vollständig in einem tragbaren Gehäuse 79, vorzugsweise einem Kunststoffgehäuse, angeordnet. Das Empfangsgerät weist eine einzelne Antenne 80 auf, deren Signal von einer Signalverarbeitungseinrichtung 81 aufgenommen und verstärkt und in einer Demodulationsstufe 82 demoduliert und über einen Vergleicher 83 dem Mikroprozessor 85 zugeführt wird. Die Zeitsteuerung der Einrichtung erfolgt über einen Zeitgeber 84. Das den Mikroprozessor 85 steuernde Programm sowie die erforderlichen Daten sind in einem Speicher 86 untergebracht. Die Ausgangssignale des Mikroprozessors können mit einer Anzeigeeinrichtung 87 angezeigt werden. Weiterhin ist eine Schalteinrichtung oder Tastatur 88 vorgesehen, durch die der Benutzer dem Empfangsgerät Anweisungen übermitteln kann. Zur Messung des Druckes innerhalb des Gehäuses, der dem Umgebungsdruck entspricht, ist ein Drucksensor 89 vorgesehen. Die Stromversorgung der gesamten Einrichtung erfolgt über eine Batterie 90, die ebenfalls im Gehäuse angeordnet ist.

Die Funktion dieser Vorrichtung ist nun wie folgt:
Das Gerät ist dafür vorgesehen, im stationären Modus verwendet zu werden, d.h., um den Druck vor Fahrtantritt oder während einer Fahrtpause zu messen. Eine Bedienungskraft geht mit diesem Gerät von Reifen zu Reifen und betätigt jeweils einen entsprechenden Schalter der Schalteinrichtung. Daraufhin wird von dem Empfangsgerät ein Signal ausgegeben, wie dies vorstehend in bezug auf das zweite Ausführungsbeispiel erläutert wurde, worauf das Sendegerät des Rades, welches sich im Sendebereich des Empfangsgerätes befindet, dazu veranlaßt wird, eine Messung auszuführen und das Meßsignal auszustrahlen. Das Empfangsgerät prüft das Identifikationssignal und schreibt, wenn der Vergleich positiv war, den gemessenen Druckmeßwert in den Speicher 86 mit der zugehörigen Radposition ein und zeigt ihn außerdem in der Anzeigeeinrichtung 87 an. Insbesondere bei Lastkraftwagen kann die Messung vereinfacht und beschleunigt werden, wenn im Sendegerät eine Zufallssteuerung vorgesehen ist, welche bewirkt, daß die Sendegeräte mit einer gewissen zufallsabhängigen Zeitverzögerung senden. Dadurch ist es möglich, daß die Meßergebnisse von zwei oder mehr Rädern praktisch gleichzeitig und auch kollisionsfrei aufgenommen und dann angezeigt werden können.

Insbesondere, wenn das nach diesem Ausführungsbeispiel geschaltete Gerät für Lastkraftwagen eingesetzt wird, ist es zweckmäßig, das Gerät weiter so auszugestalten, daß es nicht nur die aktuellen Meßwerte und die zugehören Reifenpositionen angezeigt, sondern daß die Werte und das Datum und die Uhrzeit, zu denen diese Werte aufgenommen wurden, für längere Zeit abgespeichert werden. Auf diese Weise ist es möglich, zu überprüfen, ob die vorgeschriebenen Druckmessungen regelmäßig durchgeführt wurden. Weiterhin ist es auch möglich, nach einem Unfall festzustellen, wann der Reifendruck in den verschiedenen Rädern zuletzt gemessen wurde und wie hoch der Druck jeweils war.

Die Paarung muß hier manuell für jedes Rad durchgeführt werden, da andernfalls die Radposition nicht feststellbar ist. Zur Paarung wird das Empfangsgerät in die Nähe des jeweiligen Rades gebracht, dessen Positionsbezeichnung über die Tastatur 88 in das Gerät eingegeben und anschließend über eine Intensitätsmessung festgestellt, welches das stärkste empfangene Signal ist, und danach das entsprechende Identifikationssignal in bezug auf die eingegebene Radposition abgespeichert. Statt der Intensitätsmessung kann auch hier die Paarung mittels eines definierten Ereignisses, wie beispielsweise ein Druckabfall im jeweiligen Rad bestätigt werden.

Da das Empfangsgerät beim zuletzt beschriebenen Ausführungsbeispiel auch eine Sendeeinrichtung aufweist, um das Startsignal für die Messung an die Sendegeräte zu übermitteln, kann die Paarung bei diesem Ausführungsbeispiel, wie auch beim abgewandelten (gestrichelt dargestellten) Ausführungsbeispiel gemäß den Fig. 1 bis 5 durch ein Signal ausgelöst werden.

In diesem Fall wird das an das Sendegerät übertragene Signal so gestaltet, daß der im Sendegerät angeordnete Mikroprozessor unterscheiden kann, ob eine Druckmessung mit nachfolgender Ausstrahlung des Drucksignals erfolgen soll, oder ob eine Umschaltung in den Paarungsmodus erwünscht ist. Nach dem Umschalten in den Paarungsmodus sendet das Sendegerät dann keine Druckwerte, sondern sendet für ein vorbestimmtes Zeitintervall das Identifikationssignal mit einem Zusatzsignal, welches den Paarungsmodus anzeigt,aus. Die Empfangseinrichtung, die ebenfalls in den Paarungsmodus geschaltet ist, erkennt das Identifikationssignal und speichert es entsprechend ab.

Es ist auch möglich, die zusätzliche Antenne und die zusätzliche Signalverarbeitungsschaltung, wie sie in bezug auf das Ausführungsbeispiel gemäß Fig. 2 gestrichelt dargestellt ist, nur dazu zu verwenden, den Paarungsmodus einzuleiten. In diesem Fall können Antenne und Signalverarbeitungsschaltung so aufgebaut sein, daß das von dieser Antenne empfangene Signal nicht verstärkt wird, sondern in einer so hohen Intensität empfangen werden muß, daß es unmittelbar dem Mikroprozessor zugeführt werden kann. Das Gerät, das den Paarungsmodus beim Sendegerät auslöst, ist dann vorzugsweise so gestaltet, daß die erforderliche Signalintensität zum Umschalten des individuellen Sendegerätes in den Paarungsmodus nur erreicht wird, wenn das Gerät, das das Signal für den Paarungsmodus aussendet, und welches von der übrigen Empfangseinrichtung völlig getrennt sein kann, sehr nahe an das jeweilige Sendegerät, also z.B. unmittelbar an das Reifenventil gehalten wird. Sobald das Sendegerät dieses Paarungsmodussignal empfängt, sendet es dann das Identifikationssignal aus mit einer Zusatzinformation für das in den Paarungsmodus geschaltete Empfangsgerät, das bei diesem individuellen Sendegerät der Paarungsmodus aktiviert ist.

Bei diesem Ausführungsbeispiel geht eine Bedienungskraft mit dem Aktivierungsgerät, welches die Umschaltung des jeweiligen Sendegerätes in den Paarungsmodus bewirkt, von Rad zu Rad und schaltet damit das jeweilige Rad in den Paarungsmodus um. Durch eine entsprechende Betätigung eines Schalters am Empfangsgerät oder durch die Einhaltung einer bestimmten, vorgegebenen Reihenfolge werden dann die jeweiligen Signale vom Empfangsgerät den einzelnen Radpositionen zugeordnet.

Eine derartige Aktivierung kann auch durch andere Ereignisse ausgelöst werden. So kann am Sendegerät ein Reedkontakt vorgesehen sein, welcher mit einem von außen in die Nähe des Reifens gebrachten Magneten betätigt wird. Weiterhin ist es denkbar, am Reifenventilschaft oder am Reifenventilfuß eine mechanisch zu betätigende Schalteinrichtung vorzusehen, die manuell geschaltet oder durch eine manuell bewirkte seitliche Kippbewegung des Ventils betätigt wird.

## Patentansprüche

1. Kontrollvorrichtung für den Luftdruck in der Luftkammer von luftbereiften Fahrzeugrädern mit
einer am Fahrzeugrad angeordneten Meßeinrichtung, welche ein Drucksignal ausgibt;
einer am Fahrzeugrad angeordneten Sendeeinrichtung, welche das von der Druckmeßeinrichtung ausgehende Drucksignal aufnimmt und ein diesem entsprechendes Drucksendesignal aussendet,
einer in der Sendeeinrichtung vorgesehenen Sende-Steuereinrichtung, welche die Ausstrahlung des Sendesignals steuert,
einer in der Sendeinrichtung vorgesehenen Signalgenerierungseinrichtung, welche ein Identifikationssignal generiert, das für die individuelle Sendeeinrichtung charakteristisch ist, wobei diese Steuereinrichtung bewirkt, daß dieses Identifikationssignal zumindest einmal vor oder nach der Ausstrahlung des Drucksendesignals ausgestrahlt wird;
einer im Abstand zum Fahrzeugrad angeordneten Empfangseinrichtung, welche das von der Sendeeinrichtung ausgestrahlte Sendesignal empfängt, wobei die Empfangseinrichtung einen Speicher aufweist, in dem ein der zugehörigen individuellen Sendeeinrichtung nach einem vorgegebenen Kriterium zugeordnetes Identifikations-Vergleichssignal abgespeichert ist, welches veränderbar ist, um das Identifikationssignal und das Identifikations-Vergleichssignal von Sende- und Empfangseinrichtung aneinander anzupassen;
einer Anzeigeeinrichtung, welche mit der Empfangseinrichtung verbunden ist und Daten als Zahlen oder Symbole anzeigt, welche von dem von der Empfangseinrichtung empfangenen Sendesignal abgeleitet sind;
einer in der Empfangseinrichtung angeordneten Vergleichseinrichtung, welche prüft, ob das von der Sendeeinrichtung ausgestrahlte Identifikationssignal dem in der Empfangseinrichtung gespeicherten Identifikations- und Vergleichssignal Zugeordnet ist, wobei eine Weiterverarbeitung der von der Empfangseinrichtung aufgenommenen Signale nur dann erfolgt, wenn das von der Empfangseinrichtung empfangene und das in der Empfangseinrichtung gespeicherte Identifikations-Vergleichssignal das Zuordnungskriterium erfüllen,
wobei die im Fahrzeugrad angeordnete Druckmeßeinrichtung ein für den Druck repräsentatives elektrisches Drucksignal ausgibt,
**dadurch gekennzeichnet**,
daß die Empfangseinrichtung mit einer Schalteinrichtung verbunden ist, welche ein Umschalten der Empfangseinrichtung vom normalen Betriebsmodus, in dem der Luftdruck kontrolliert wird, in einen Paarungsmodus ermöglicht, in welchem die Empfangseinrichtung das von jeder Sendeeinrichtung übertragene Identifikationssignal empfängt und als Identifikations-Vergleichssignal, bevorzugt mit einer Zuordnung der jeweiligen Radposition, abspeichert.

2. Kontrollvorrichtung gemäß Anspruch 1, dadurch gekennzeichnet, daß eine Umwandlungseinrichtung vorgesehen ist, die die von der Sendeeinrichtung zu übertragenden Signale digital codiert.

3. Kontrollvorrichtung gemäß Anspruch 1 oder 2, dadurch gekennzeichnet, daß zumindest die Steuereinrichtung und die Signalgenerierungs-Einrichtung der Sendeeinrichtung in einer ersten Mikroprozessor-Einrichtung zusammengefaßt sind, welche durch ein in einem Speicher gespeichertem Programm gesteuert ist.

4. Kontrollvorrichtung gemäß mindestens einem der Ansprüche 1 bis 3, dadurch gekennzeichnet, daß eine Signalverstärkungs- und Filtereinrichtung, die Vergleichseinrichtung und der Speicher zum Abspeichern des Identifikations-Vergleichssignales der Empfangseinrichtung in einem integrierten Baustein enthalten sind.

5. Vorrichtung gemäß mindestens einem der Ansprüche 1 bis 4, dadurch gekennzeichnet, daß das Identifikationssignal in der Sendeeinrichtung als digitale Zahlenfolge mit n Bits abgespeichert ist und daß das Identifikations-Vergleichssignal im Empfänger ebenfalls als digitale Zahlenfolge mit n Bits abgespeichert ist.

6. Kontrollvorrichtung gemäß mindestens einem der Ansprüche 1 bis 5, dadurch gekennzeichnet, daß die Übertragung der Signale von der Sendeeinrichtung zur Empfangseinrichtung mit elektromagnetischen Wellen (Rundfunkwellen) konstanter Frequenz als Trägerwellen erfolgt.

7. Kontrollvorrichtung gemäß Anspruch 6, dadurch gekennzeichnet, daß die Frequenz der elektromagnetischen Trägerwellen im Langwellenbereich, bevorzugt zwischen 4 und 100 Kilohertz, besonders bevorzugt zwischen 4 und 50 Kilohertz und ganz besonders bevorzugt zwischen 4 und 15 Kilohertz liegt.

8. Kontrollvorrichtung gemäß Anspruch 6 oder 7, dadurch gekennzeichnet, daß die Übertragung der Daten über eine Veränderung der Phasenlage eines sinusförmigen Trägersignals (phase shift keying) und bevorzugt über eine differentielle Veränderung der Phasenlage (differential phase shift keying) erfolgt.

9. Kontrollvorrichtung gemäß mindestens einem der Ansprüche 1 bis 8, dadurch gekennzeichnet, daß bei jeder Ausstrahlung zumindest vier Bitfolgen mit jeweils vorgegebener Bit-Anzahl gesendet werden, wobei die erste Bitfolge eine Präambel ist, die die Synchronisation der Empfangseinrichtung auf die Sendeeinrichtung ermöglicht, die zweite oder dritte Bitfolge eine Datenfolge, welche für das gemessene Drucksignal repräsentativ ist bzw. welche das Identifikationsignal enthält, und eine vierte und letzte Bitfolge als Postambel, die jede Ausstrahlung abschließt.

10. Kontrollvorrichtung gemäß mindestens einem der Ansprüche 1 bis 9, dadurch gekennzeichnet, daß die Sendeeinrichtung eine Zeitgebereinheit aufweist und derart gesteuert ist, daß die Druckmeßeinrichtung den Druck in vorgegebenen, im wesentlichen festen Zeitintervallen mißt.

11. Kontrollvorrichtung gemäß Anspruch 10, dadurch gekennzeichnet, daß der bei der Druckmessung ermittelte Wert in ein Sendesignal umgewandelt und gesendet wird, bevor die nächste Druckmessung erfolgt, und daß eine Zufallsschaltung vorgesehen ist, welche bewirkt, daß der zeitliche Abstand zwischen der Druckmessung und der Ausstrahlung des gemessenen Drucksignals zufallsabhängig ist.

12. Kontrollvorrichtung gemäß mindestens einem der Ansprüche 1 bis 11, dadurch gekennzeichnet, daß die Sendeeinrichtung eine Detektoreinrichtung aufweist, welche ein von der Empfangseinrichtung ausgestrahltes Signal erkennt und welche beim Auftreten dieses Signals die Sendeeinrichtung von einem passiven Stand-by-Modus in einen aktiven Sende-Modus umschaltet, damit eine Druckmessung durchgeführt und das Sendesignal ausgestrahlt wird.

13. Kontrollvorrichtung gemäß mindestens einem der Ansprüche 1 bis 12, dadurch gekennzeichnet, daß an mindestens zwei Rädern eines Kraftfahrzeuges eine Druckmeßeinrichtung und eine Sendeeinrichtung angeordnet ist.

14. Kontrollvorrichtung gemäß Anspruch 13, dadurch gekennzeichnet, daß jeder, an einem Fahrzeugrad des Kraftfahrzeuges angeordneten Druckmeß- und -sendeeinrichtung eine Empfangseinrichtung zugeordnet ist, wobei die von der Empfangseinrichtung empfangenen Signale zu einer zentralen Anzeigeeinrichtung geführt sind.

15. Kontrollvorrichtung gemäß Anspruch 13, dadurch gekennzeichnet, daß eine Empfangseinrichtung vorgesehen ist, welche die Signale aller Sendeeinrichtungen aufnimmt.

16. Kontrollvorrichtung gemäß Anspruch 15, dadurch gekennzeichnet, daß diese Empfangseinrichtung in einem tragbaren Gehäuse angeordnet ist, und daß eine Schalteinrichtung vorgesehen ist, welche bewirkt, daß die Empfangseinrichtung über ein ihr zugeordnetes Sendegerät ein Signal ausstrahlt, welches von den an den Rädern angeordneten Sendeeinrichtungen erkannt wird und diese veranlaßt, eine Druckmessung durchzuführen und das Ergebnis der Druckmessungen als Signal auszustrahlen.

17. Kontrollvorrichtung gemäß Anspruch 1, dadurch gekennzeichnet, daß jede Sendeeinrichtung eine Detektoreinrichtung aufweist, welche die Ausstrahlung eines vorgegebenen Umschaltsignales erkennt und darauf die Sendeeinrichtung in einen Paarungsmodus umschaltet, in welchem das Identifikationssignal und ein den Paarungsmodus anzeigendes Zusatzsignal ausgestrahlt wird.

18. Kontrollvorrichtung gemäß mindestens einem der Ansprüche 1 bis 17, dadurch gekennzeichnet, daß das von der Sendeeinrichtung übertragene Signal weiterhin Zusatzinformationen beinhaltet, welche bei der Auswertung des Signals in der Empfangseinrichtung eine Fehlererkennung und gegebenenfalls eine Fehlerkorrektur ermöglichen.

19. Kontrollvorrichtung gemäß mindestens einem der Ansprüche 1 bis 18, dadurch gekennzeichnet, daß das von der Sendeeinrichtung ausgestrahlte Identifikationssignal und das in der Empfangseinrichtung gespeicherte Identifikations-Vergleichssignal identisch sind.

## Claims

1. Device for monitoring the air-pressure in the air chambers of pneumatic tyres fitted on vehicle wheels, comprising
- a measuring device located on the vehicle, which outputs a pressure signal;
- a transmitting device fitted to the vehicle wheel, which receives the pressure signal coming from the pressure measuring device and transmits a pressure transmission signal corresponding thereto,
- a transmission control device provided in the transmitting device, which controls the emission of the transmission signal,
- a signal generator provided in the transmitting device which generates an identification signal that is characteristic of the individual transmitting device, said control device causing said identification signal to be emitted at least once before or after the emission of the pressure transmission signal,
- a receiving device spaced from the vehicle wheel, which receives the transmission signal emitted from the transmitting device, the receiving device having a memory in which is stored a reference identification signal related to the associated individual transmitting device according to a predetermined criterion and which is capable or being changed in order to match the identification signal and the reference identification signal from the transmitting and receiving devices with one another;
- a display device which is connected to the receiving device and displays as numerals or symbols data which are derived from the transmission signal received by the receiving device;
- a comparing device located in the receiving device, which tests whether the identification signal emitted by the transmitting device is related to the identification and reference signal stored in the receiving device, further processing of the signal received by the receiving device only taking place if the comparison signal received by the receiving device and the reference identification signal stored in the receiving device satisfy the relationship criterion,
- wherein the pressure measuring device fitted in the vehicle wheel outputs an electrical pressure signal representative of the pressure,
characterised in that
the receiving device is connected to a switching device which enables the receiving device to be switched over from the normal operating mode in which the air-pressure is monitored into a matching mode in which the receiving device receives the identification signal transferred from each transmitting device and stores it as a reference identification signal, preferably with an assignment to the respective wheel position.

2. Monitoring device according to claim 1, characterised in that a conversion device is provided which digitally codes the signals to be communicated by the transmitting device.

3. Monitoring device according to claim 1 or claim 2, characterised in that at least the control device and the signal generating device of the transmitting device are combined in a first microprocessor device which is controlled by a program stored in a memory.

4. Monitoring device according to at least one of claims 1 to 3, characterised in that a signal amplification and filtering device, the comparing device and the memory for storing the reference identification signal of the receiving device are included in an integrated module.

5. Device according to at least one of claims 1 to 4, characterised in that the identification signal is stored in the transmitting device as a digital sequence of numbers having n bits and that the reference identification signal is likewise stored in the receiver as a digital sequence of numbers having n bits.

6. Monitoring device according to at least one of claims 1 to 5, characterised in that the communication of the signals from the transmitting device to the receiving device takes place using electromagnetic waves (broadcast waves) of constant frequency as carrier waves.

7. Monitoring device according to claim 6, characterised in that the frequency of the electromagnetic carrier waves is in the long wave region, preferably between 4 and 100 kilohertz, more preferably between 4 and 50 kilohertz and most preferably between 4 and 15 kilohertz.

8. Monitoring device according to claim 6 or claim 7, characterised in that the communication of the data takes place by means of a change in the phase angle of a sinusoidal carrier signal (phase shift keying), and preferably by means of a differential change in the phase angle (differential phase shift keying).

9. Monitoring device according to at least one of claims 1 to 8, characterised in that in each emission at least four bit sequences, each having a predetermined number of bits, are transmitted, the first bit sequence being a preamble which enables synchronisation of the receiving device with the transmitting device, one of the second and third bit sequences being a data sequence which is representative of the measured pressure signal and the other including the identification signal, and a fourth and last bit sequence being a postamble which concludes each emission.

10. Monitoring device according to at least one of claims 1 to 9, characterised in that the transmitting device has a timer unit and is controlled in such a way that the pressure measuring device measures the pressure at predetermined, substantially constant intervals of time.

11. Monitoring device according to claim 10, characterised in that the value determined in the pressure measurement is converted into a transmission signal and is transmitted before the next pressure measurement takes place, and that a random number circuit is provided which causes the time interval between the pressure measurement and the emission of the measured pressure signal to be random.

12. Control device according to at least one of claims 1 to 11, characterised in that the transmitting device has a detector device which recognises a signal emitted by the receiving device and which, when this signal occurs, switches the transmitting device from a passive stand-by mode into an active transmitting mode, so that a pressure measurement is performed and the transmission signal is emitted.

13. Monitoring device according to at least one of claims 1 to 12, characterised in that a pressure measuring device and a transmitting device is fitted to at least two wheels of a motor vehicle.

14. Monitoring device according to claim 13, characterised in that each pressure measuring and transmitting device fitted to a wheel of the motor vehicle has a receiving device associated with it, the signals received by the receiving device being passed to a central display device.

15. Monitoring device according to claim 13, characterised in that a receiving device is provided which receives the signals from all the transmitting devices.

16. Monitoring device according to claim 15, characterised in that said receiving device is fitted in a portable housing, and that a switching device is provided which causes the receiving device to emit, via a transmitting device associated with it, a signal which is recognised by the transmitting devices fitted to the wheels and causes them to perform a pressure measurement and to emit the result of the pressure measurements as a signal.

17. Monitoring device according to claim 1, characterised in that each transmitting device has a detector device which recognises the emission of a predetermined changeover signal and thereupon switches the transmitting device into a matching mode, in which the identification signal and an additional signal indicating the matching mode is emitted.

18. Monitoring device according to at least one of claims 1 to 17, characterised in that the signal communicated from the transmitting device also contains additional information which enables error detection, and optionally error correction, to be performed in the evaluation of the signal in the receiving device.

19. Monitoring device according to at least one of claims 1 to 18, characterised in that the identification signal emitted by the transmitting device and the reference identification signal stored in the receiving device are identical.

## Revendications

1. Système de contrôle de la pression d'air dans la capacité d'air de roues à bandages pneumatiques de véhicules automobiles, comprenant
un dispositif de mesure installé sur la roue de véhicule et délivrant un signal de pression;
un dispositif d'émission installé sur la roue de véhicule, qui reçoit le signal de pression délivré par le dispositif de mesure de pression ou dispositif manométrique et émet un signal d'émission de pression correspondant;
un dispositif de commande d'émission prévu dans le dispositif d'émission et commandant le rayonnement du signal d'émission;
un dispositif générateur de signal prévu dans le dispositif d'émission et générant un signal d'identification caractéristique du dispositif d'émission individuel concerné, le dispositif de commande provoquant le rayonnement de ce signal d'identification au moins une fois, avant ou après le rayonnement du signal d'émission de pression;
un dispositif de réception placé à distance de la roue de véhicule, qui reçoit le signal d'émission rayonné par le dispositif d'émission, le dispositif de réception comportant une mémoire dans laquelle est mémorisé un signal témoin d'identification coordonné selon un critère préfixé au dispositif d'émission individuel correspondant, signal témoin qui est modifiable en vue de l'adaptation mutuelle du signal d'identification et du signal témoin d'identification des dispositifs d'émission et de réception;
un dispositif d'indication relié au dispositif de réception et indiquant des données sous forme de nombres ou de symboles dérivés du signal d'émission reçu par le dispositif de réception;
un dispositif de comparaison placé dans le dispositif de réception et vérifiant si le signal d'identification rayonné par le dispositif d'émission est coordonné au signal témoin d'identification mémorisé dans le dispositif de réception, un traitement consécutif des signaux reçus par le dispositif de réception s'effectuant seulement si le signal d'identification reçu par le dispositif de réception et le signal témoin d'identification mémorisé dans le dispositif de réception répondent au critère de coordination;
le dispositif manométrique installé dans la roue de véhicule délivrant un signal de pression électrique représentatif de la pression,
caractérisé en ce que
le dispositif de réception est relié à un dispositif de commutation permettant de commuter le dispositif de réception d'un mode de fonctionnement normal, dans lequel est contrôlée la pression d'air, à un mode d'appariement dans lequel le dispositif de réception reçoit le signal d'identification transmis par chaque dispositif d'émission et le mémorise en tant que signal témoin d'identification, de préférence avec une coordination à l'emplacement de la roue concernée.

2. Système de contrôle selon la revendication 1, caractérisé en ce qu'il comprend un dispositif de conversion produisant un codage numérique des signaux à transmettre par le dispositif d'émission.

3. Système de contrôle selon la revendication 1 ou 2, caractérisé en ce qu'au moins le dispositif de commande et le dispositif générateur de signal du dispositif d'émission sont rassemblés dans un premier dispositif à microprocesseur commandé par un programme mémorisé dans une mémoire.

4. Système de contrôle selon au moins une des revendications 1 à 3, caractérisé en ce qu'un dispositif d'amplification et de filtrage du signal, le dispositif de comparaison et la mémoire pour mémoriser le signal témoin d'identification du dispositif de réception sont contenus dans un circuit intégré.

5. Système selon au moins une des revendications 1 à 4, caractérisé en ce que le signal d'identification est mémorisé dans le dispositif d'émission comme une suite de nombres numériques à n bits et que le signal témoin d'identification dans le récepteur est également mémorisé comme une suite de nombres numériques à n bits.

6. Système de contrôle selon au moins une des revendications 1 à 5, caractérisé en ce que la transmission des signaux du dispositif d'émission au dispositif de réception s'effectue par des ondes électromagnétiques (ondes radioélectriques) de fréquence constante et servant d'ondes porteuses.

7. Système de contrôle selon la revendication 6, caractérisé en ce que la fréquence des ondes porteuses électromagnétiques est comprise dans le domaine des grandes ondes, de préférence entre 4 et 100 kHz, le domaine particulièrement préféré allant de 4 à 50 kHz et mieux encore de 4 à 15 kHz.

8. Système de contrôle selon la revendication 6 ou 7, caractérisé en ce que la transmission des données s'effectue au moyen d'un changement de la relation de phase d'un signal porteur sinusoïdal (modulation par déplacement de phase) et, de préférence, au moyen d'un changement différentiel de la relation de phase (modulation par déplacement de phase différentielle).

9. Système de contrôle selon au moins une des revendications 1 à 8, caractérisé en ce que, à chaque rayonnement, au moins quatre suites de bits, contenant chacune un nombre prédéterminé de bits, sont émises, la première suite de bits étant un préambule permettant la synchronisation du dispositif de réception sur le dispositif d'émission, la deuxième ou la troisièle suite de bits étant une suite de données représentative du signal de pression mesuré ou contenant le signal d'identification, la quatrième ou dernière suite de bits constituant un synchroniseur final qui termine chaque rayonnement.

10. Système de contrôle selon au moins une des revendications 1 à 9, caractérisé en ce que le dispositif d'émission comporte une unité d'horloge et est commandé de manière que le dispositif manométrique mesure la pression à des intervalles de temps prédeterminés, essentiellement fixes.

11. Système de contrôle selon la revendication 10, caractérisé en ce que la valeur relevée lors de la mesure de pression est convertie en un signal d'émission qui est émis avant que la mesure de pression suivante n'ait lieu, et qu'un circuit aléatoire est prévu pour faire en sorte que l'intervalle dans le temps entre la mesure de pression et le rayonnement du signal de pression correspondant à cette mesure dépende du hasard.

12. Système de contrôle selon au moins une des revendications 1 à 11, caractérisé en ce que le dispositif d'émission comporte un dispositif détecteur qui reconnaît un signal rayonné par le dispositif de réception et qui, à l'apparition de ce signal, commute le dispositif d'émission d'un mode passif d'attente à un mode actif d'émission pour qu'une mesure de pression soit effectuée et que le signal d'émission soit rayonné.

13. Système de contrôle selon au moins une des revendications 1 à 12, caractérisé en ce qu'un dispositif manométrique et un dispositif d'émission sont installés sur au moins deux roues d'un véhicule automobile.

14. Système de contrôle selon la revendication 13, caractérisé en ce qu'un dispositif de réception est coordonné à chaque système manométrique et d'émission installé sur une roue du véhicule automobile, les signaux reçus par le dispositif de réception étant envoyés à un dispositif d'indication central.

15. Système de contrôle selon la revendication 13, caractérisé en ce qu'il comprend un dispositif de réception recevant des signaux de tous les dispositifs d'émission.

16. Système de contrôle selon la revendication 15, caractérisé en ce que ce dispositif de réception est placé dans un boîtier portatif et qu'un dispositif de commutation est prévu pour faire en sorte que le dispositif de réception rayonne, à l'aide d'un appareil d'émission qui lui est coordonné, un signal reconnu par les dispositifs d'émission installés sur les roues et les amenant à effectuer une mesure de pression et de rayonner le résultat des mesures de pression comme un signal.

17. Système de contrôle selon la revendication 1, caractérisé en ce que chaque dispositif d'émission comporte un dispositif détecteur qui reconnaît le rayonnement d'un signal de commutation prédéterminé et qui, à la suite de la reconnaissance de ce signal, commute le dispositif d'émission à un mode d'appariement dans lequel sont rayonnés le signal d'identification et un signal supplémentaire indiquant le mode d'appariement.

18. Système de contrôle selon au moins une des revendications 1 à 17, caractérisé en ce que le signal transmis par le dispositif d'émission contient en outre des informations supplémentaires permettant une détection et éventuellement une correction d'erreurs lors de l'exploitation du signal dans le dispositif de réception.

19. Système de contrôle selon au moins une des revendications 1 à 18, caractérisé en ce que le signal d'identification rayonné par le dispositif d'émission et le signal témoin d'identification mémorisé dans le dispositif de réception sont identiques.
